# EUROPÄISCHE PATENTSCHRIFT

(11) **EP 3 932 268 B1**
(45) Veröffentlichungstag und Bekanntmachung des Hinweises auf die Patenterteilung: **09.11.2022**
(21) Anmeldenummer: 21178523.3
(22) Anmeldetag: 09.06.2021
(51) Int. Cl.: A47J 31/36

(54) **GEFEDERTE BRÜHEINHEIT UND VERFAHREN ZUM BETRIEB EINER GEFEDERTEN BRÜHEINHEIT**
SUSPENDED BREWING UNIT AND METHOD FOR OPERATING A SUSPENDED BREWING UNIT
UNITÉ DE BRASSAGE À RESSORT ET PROCÉDÉ DE FONCTIONNEMENT D'UNE UNITÉ DE BRASSAGE À RESSORT

(30) Priorität: 01.07.2020 DE 102020117378
(43) Veröffentlichungstag der Anmeldung: 05.01.2022
(73) Patentinhaber: Eugster/Frismag AG, 8580 Amriswil (CH)
(72) Erfinder: RIESSBECK, Wolfgang, 8597 Landschlacht (CH); WÄGER, Simon, 8580 Amriswil (CH); OBERHOLZER, Arnold, 9200 Gossau SG (CH)
(74) Vertreter: Patent- und Rechtsanwälte Behrmann Wagner PartG mbB

(56) Entgegenhaltungen:
- EP-A1- 2 654 525
- DE-U1-202009 000 258

## Beschreibung

Die vorliegende Erfindung betrifft eine Brüheinheit für eine Getränkezubereitungsvorrichtung, eine Getränkezubereitungsvorrichtung mit entsprechender Brüheinheit sowie ein Verfahren zum Betrieb einer Brüheinheit für eine Getränkezubereitungsvorrichtung.

Bei gattungsgemäßen Getränkezubereitungsvorrichtungen, beispielsweise Kaffee- und/oder Espressomaschinen sowie Kaffee- und/oder Espressovollautomaten, kommen bereits Brüheinheiten in verschiedenen Ausgestaltungen zum Einsatz. Die Brüheinheit übernimmt dabei die Funktion ein Getränkesubstrat, beispielsweise Kaffeepulver, in einer ersten Stellung aufzunehmen, beispielsweise an einem Auslass oder Ausgang eines Mahlwerks oder einer Mühle, das Getränkesubstrat zu verdichten, mit einem Brühfluid zu versetzen oder auszulaugen und im Anschluss an einen Brühvorgang oder zum Abschluss eines Brühvorgangs das aufgebrühte oder ausgelaugte Getränkesubstrat auszuwerfen.

Zu diesen Zwecken verfügen die bekannten Brüheinheiten über Brühkammern, die entsprechend zwischen verschiedenen Positionen oder Stellungen innerhalb der Brüheinheit bewegt oder verstellt werden können. Dabei ist es, wie bereits angedeutet, wichtig und sinnvoll, dass vor einem jeweiligen Beginn des Brühvorgangs oder Brühprozesses das Getränkesubstrat in der Brühkammer verdichtet wird. Zu diesem Zweck sind im Stand der Technik bereits Brühköpfe, gegebenenfalls versehen mit vorstehenden Brühzylindern oder Brühkolben, bekannt, die bei der Überführung der Brühkammer in eine Brühstellung in eine Öffnung der Brühkammer, über die beispielsweise auch das Getränkesubstrat aufgenommen und ausgestoßen wird, eintaucht oder einführt werden und dabei vor Beginn des Brühvorgangs mit einer Anpressoberfläche das Getränkesubstrat in der dann vom Brühkopf oder Brühkolben verschlossenen und abgedichteten Brühkammer verdichten. Anschließend wird über entsprechende Öffnungen, Zuleitungen und Pumpmittel das Brühfluid in die Brühkammer eingeleitet und dadurch der Brühvorgang initiiert.

Auf die Anmelderin geht dabei ein Konzept einer Brühkammer zurück bei der die Brühkammer über Gleitsteine mit einer Kurbelwelle mechanisch verbunden ist. Mittels Drehbewegung an der Kurbelwelle wird die Brühkammer in Richtung eines federnd gelagerten Brühkopfes oder Brühkolbens bewegt. Der Nachteil einer Lösung unter Einsatz eines federgelagerten Brühkopfes oder Brühkolbens, wie er beispielsweise in der EP 1 217 925 B1 beschrieben ist, besteht im verhältnismäßig großen Bauraum für den federnd gelagerten Brühkopf. Dieser benötigte Bauraum widerstrebt dem Wunsch nach möglichst kompakten Getränkezubereitungsvorrichtungen. Um einen übermäßig großen Bauraum zu vermeiden oder zu verkleinern, kann vorgesehen sein, dass die Druckfedern zur gefederten Lagerung des Brühkopfes mit entsprechend hoher Richtgröße oder Federrate eingesetzt werden. Dies wiederum hat einen nachteiligen Einfluss auf den Verdichtungsprozess des Getränkesubstrats, bei dem dann abhängig von der jeweiligen Pulvermenge in der Brühkammer und dem daraus resultierenden Federweg der Druckfedern zur Lagerung des Brühkopfes oder Brühkolbens das Getränkesubstrat mit sehr unterschiedlichen Anpresskräften erfolgt, was wiederum einen unerwünschten nachteiligen Einfluss auf das nachfolgende Aufbrühen und das daraus resultierende Getränk ausübt.

Weiterhin sind aus dem Stand der Technik bereits Ansätze bekannt, bei denen der Boden einer Brühkammer und damit der Teil der Brühkammer, der dem Brühkopf oder Brühkolben gegenüberliegend angeordnet ist, federnd gelagert ist. Derartige Lösungen sind beispielsweise in der EP 2 567 645 A1 oder der EP 2 654 524 A1 beschrieben. An derartigen Konstruktionen ist jedoch nachteilig, dass insgesamt mehr Aufwand betrieben werden muss, um die Brühkammer, gerade im geschlossenen oder verschlossenen Zustand abzudichten. Es entstehen also mithin komplexe Konstruktionen, die einen großen konstruktiven Aufwand erforderlich machen und zudem hinsichtlich ihres Dauerbetriebsverhaltens oder hinsichtlich ihres Verschleißes nachteilig sind.

Die DE 20 2009 000 258 U1 betrifft ferner eine Brühgruppe eines Kaffeevollautomaten mit einem federgelagerten Brühkolben, der bei der Verdichtung von Kaffeepulver in der Brühkammer zurückfedert, wenn die Brühkammer gegen einen feststehenden Brühkopf gefahren wird. Abgesehen von dem Brühkolben ist der Rest der Brühkammer statisch bzw. ungefedert ausgeführt.

Die EP 2 654 525 B1 offenbart außerdem einen Kaffeevollautomaten mit einer Vorrichtung zur Detektion einer Verdichtung oder Verpresskraft. Dabei ist vorgesehen, dass die mittels einer rotatorisch angeriebenen Spindel verfahrbare Brühkammer gegen einen Brühkopf gefahren wird, wobei beim Erreichen einer Anpresskraft oder Verdichtung des Kaffeepulvers, die über zwei Achszapfen in jeweiligen Aufnahmen gelagerte Spindel elastisch eine Tellerfeder teilverformt, wobei beim Erreichen eines vorgegebenen Verstellwegs der Spindel gegenüber der Spindelaufnahme ein Mikroschalter geschlossen wird, der dann als Detektion einer vorgegebenen Verdichtung oder Anpresskraft wirkt. Die Tellerfeder ist damit zwischen einem Gehäuse und einer Verstelleinrichtung und damit abseits einer Brühkammer und/oder eines Brühkammerträgers angeordnet.

Ausgehend vom vorangehend genannten Stand der Technik ist es deshalb Aufgabe der vorliegenden Erfindung eine Brüheinheit für eine Getränkezubereitungsvorrichtung, eine entsprechende Getränkezubereitungsvorrichtung samt Brüheinheit und ein Verfahren zum Betrieb einer Brüheinheit vorzuschlagen, die die Nachteile im Stand der Technik überwinden und es insbesondere ermöglichen bei einem kompakten Aufbau der Brüheinheit unter Verwendung eines geringen Bauraums und einer verhältnismäßig einfachen Konstruktion oder Bauweise eine von der Menge des Getränkesubstrats weitestgehend unabhängige, gleichmäßige Verdichtung oder Anpresskraft auf das Getränkesubstrat im Vorfeld eines Brühprozesses oder Brühvorgangs zu ermöglichen.

Diese Aufgabe wird im Hinblick auf die Brüheinheit mit den Merkmalen des unabhängigen Anspruchs 1 gelöst. Bezogen auf die Getränkezubereitungsvorrichtung wird diese Aufgabe mit den Merkmalen des Anspruchs 13 gelöst. Ein erfindungsgemäßes Verfahren ist im Anspruch 14 angegeben.

Vorteilhafte Ausgestaltungen und Ausführungsformen sind Gegenstand der Unteransprüche sowie der nachfolgenden Beschreibung und der Zeichnungen.

Für die erfindungsgemäße Brüheinheit für Getränkezubereitungsvorrichtungen, insbesondere Kaffee- und/oder Espressomaschinen oder -vollautomaten ist dabei gattungsgemäß vorgesehen, dass sie über eine mit einer Antriebs- oder Verstelleinrichtung zwischen unterschiedlichen Betriebsstellungen verstellbaren Brühkammer verfügt, die zur Aufnahme eines Getränkesubstrats insbesondere gemahlenem Kaffeepulver, über eine Öffnung der Brühkammer eingerichtet ist und einen, bevorzugt der Öffnung gegenüber liegenden, Brühkammerboden und einen an dem Brühkammerboden angrenzenden und mit dem Brühkammerboden verbundenem, bevorzugt zylindrischen, insbesondere die Öffnung begrenzenden, Brühkammermantel aufweist.

Ebenso ist gattungsgemäß vorgesehen, dass die Brüheinheit einen Brühkopf umfasst, der zumindest in einer Brühstellung der Brühkammer in die Öffnung der Brühkammer, bevorzugt mit einem vorstehenden Brühkolben, zumindest teilweise eingeführt angeordnet ist und weiter bevorzugt die Brühkammer verschließt und/oder abdichtet.

Erfindungsgemäß ist dabei vorgesehen, dass die Brühkammer über elastische Verformungsmittel, bevorzugt mehrere Federn, insbesondere Wendelfedern, mit einem Brühkammerträger verbunden und von diesem beweglich beabstandet ist und die Verformungsmittel so dimensioniert und ausgestaltet sind, dass beim Vorhandensein einer Mindestmenge an Getränkesubstrat in der Brühkammer beim Verstellen der Brühkammer in Richtung der Brühstellung vor dem Erreichen der Brühstellung eine Anpressoberfläche des Brühkopfes, insbesondere des Brühkolbens, mit dem Getränkesubstrat in Kontakt kommt und beim weiteren Verstellen der Brühkammer in Richtung der Brühstellung neben einer Verdichtung des Getränkesubstrats eine elastische Verformung des Verformungsmittel und eine Bewegung der Brühkammer auf den Brühkammerträger zu bewirkt.

Der Erfindungsgedanke beruht dementsprechend auf der Grundüberlegung, die Brühkammer als solche vollständig gefedert über dem Brühkammerträger auszubilden. Dabei ist besonders eine einheitliche, bevorzugt einteilige Ausbildung von Brühkammerboden und Brühkammermantel eine vorteilhafte Möglichkeit, um einfach eine insgesamt gefedert gelagerte Brühkammer zu ermöglichen. In diesem Zusammenhang soll die vollständig federgelagerte Brühkammer synonym zu eine offenen oder unverschlossenen Brühkammer verwendet und verstanden werden. Dies bedeutet, dass gerade nicht der Brühkopf federgelagert ist, der ja im geschlossenen oder verschlossenen Zustand auch einen Teil der Brühkammer ausbildet, sondern der Brühkammerboden und der Brühkammermantel.

Durch den grundsätzlichen Aufbau gattungsgemäßer Brüheinheiten ist im Bereich des Brühkammerträgers oder zwischen Brühkammerträger und Brühkammer verhältnismäßig viel Bauraum vorhanden. Mit anderen Worten ausgedrückt bedeutet dies, dass bei den gattungsgemäßen Brühkammern grundsätzlich verhältnismäßig ausgedehnte oder lange Brühkammerträger eingesetzt werden können oder sogar eingesetzt werden müssen. Diesen Umstand macht sich die vorliegende Erfindung zunutze und nutzt einen Teil dieses sowieso vorgesehenen oder sowieso vorzusehenden Bauraums im Bereich des Brühkammerträgers zur Federung der gesamten Brühkammer, also insbesondere des Brühkammerbodens zusammen mit dem Brühkammermantel. Dadurch werden verschiedene vorteilhafte Wirkungen erreicht. Besonders wird aber erreicht, dass die eingesetzten Verformungsmittel eine verhältnismäßig große Längserstreckung aufweisen können, ohne dass dadurch der Bauraum der gesamten Brüheinheit negativ beeinflusst wird. Dies wiederum führt dazu, dass ein gleichmäßiges oder identisches Anpressen des Getränkesubstrats in der Brühkammer bei Ansteuern oder beim Bewegen der Brühkammer in Richtung der Brühstellung erreicht werden kann, was wiederum vorteilhafte Auswirkungen auf das resultierende Getränk hat. Dabei ist es Teil der erfinderischen Grundidee die Verformungsmittel zwischen Brühkammerträger und Brühkammer anzuordnen, sodass einerseits die gesamte Brühkammer über die Verformungsmittel mit dem Brühkammerträger verbunden sind und dementsprechend ohne einen jeweiligen Widerstand, beispielsweise durch einen Brühkopf oder dergleichen, zusammen mit dem Brühkammerträger bewegt und verstellt werden können, gleichzeitig jedoch für den Fall, dass der Brühkopf oder Brühkolben in die Brühkammer eintaucht, diese verschließt, am Getränkesubstrat zur Anlage kommt und dieses verdichtet, eine elastische Verstellung oder Translationsbewegung der Brühkammer gegenüber dem Brühkammerträger einsetzt oder bewirkt wird, sodass das Getränkesubstrat in der Brühkammer gleichmäßig und mengenunabhängig verdichtet oder angepresst wird.

Als Mindestmenge an Getränkesubstrat soll dabei die Menge verstanden werden, die von der jeweiligen Getränkezubereitungsvorrichtung mindestens erzeugt oder in die Brüheinheit überführt wird, um ein Getränk zuzubereiten. Diese Menge kann entweder geräteseitig vorgegeben sein oder aber benutzerseitig beeinflussbar oder bestimmbar sein. Es soll sich jedoch bei den Mindestmengen gerade nicht um Restmengen oder zufällige Mengen handeln, die unbeabsichtigt, also ohne dem Ziel einer Getränkezubereitung in der Brühkammer angeordnet sind oder in die Brühkammer gelangen. Die Mindestmenge des Getränkesubstrats kann dementsprechend auch minimale Getränkeportionen des Getränkesubstrats bezeichnet werden. Umgekehrt kann jedoch auch die Mindestmenge anhand eines gewünschten Anpressdrucks oder Verdichtungszustandes des Getränkesubstrats in der Brühstellung unter Berücksichtigung der Position der Brühkammerträgers, des Brühkopfes und der Verformungsmittel definiert werden und geräteseitig hinterlegt oder bestimmt werden.

Die vorangehende Beschreibung des erfindungsgemäßen Grundkonzepts bezieht sich auf das Brühen eines Getränkesubstrats, insbesondere Kaffeepulver. Als Brühen soll hierbei jedoch nicht zwangsläufig eine Beaufschlagung mit heißem Wasser verstanden werden. Unter dem Begriff des Brühens soll in Analogie zu der englischen Begrifflichkeit des "Cold Brew" auch ein Vorgang verstanden werden, bei der ein Aufguss und/oder Auslaugen eines Getränkesubstrats mit lediglich warmem oder sogar kaltem Fluid erfolgt. Als sogenanntes Brühfluid kommt bevorzugt Wasser infrage. Es könnten jedoch auch andere Brühfluide zum Einsatz kommen. Gleichermaßen können auch andere Getränkesubstrate, beispielsweise Tee, Teepulver, Kaltgetränkpulver oder sonstige Heißgetränkpulver in einer entsprechenden Brüheinheit aufgebrüht oder ausgelaugt werden.

Gemäß einer ersten vorteilhaften Ausgestaltung der Brüheinheit kann vorgesehen sein, dass der Brühkopf starr, bevorzugt ungefedert ausgebildet und angeordnet ist. Dadurch wird in besonders vorteilhafter Weise die Verdichtung oder das Anpressen des Getränkesubstrats in der Brühkammer durch den Brühkopf ausschließlich durch die Verformungsmittel zwischen Brühkammer und Brühkammerträger ausgeglichen, begrenzt oder gesteuert. Dadurch wiederum wird in besonders vorteilhafter Weise eine sehr kompakte Bauweise der Brüheinheit ermöglicht, da gerade kein Bauraum für eine gefederte Ausgestaltung des Brühkopfes vorgesehen oder eingeplant werden muss.

Gemäß einer weiteren, bevorzugten Ausgestaltung der Brüheinheit, kann vorgesehen sein, dass der Brühkammerträger mit einer Kurbelwelleneinheit verbunden ist, wobei die Verbindung derart ausgestaltet ist, dass die Kurbelwelleneinheit je nach Rotation oder Rotationszustand eine Kippbewegung oder Linearverstellung des Brühkammerträgers und der mit dem Brühkammerträger verbundenen Brühkammer bewirkt. Beispielsweise kann vorgesehen sein, dass über die besagte Kurbelwelleneinheit und deren Rotation eine Verkippung der Brühkammer und des Brühkammerträgers in eine Befüllstellung oder Entleerstellung bewirkt wird. Insbesondere nach dem Befüllen der Brühkammer mit Getränkesubstrat kann vorteilhaft vorgesehen sein, dass aus der besagten Befüllstellung zunächst eine weitere oder erneute Kippbewegung des Brühkammerträgers oder der Brühkammer durch eine Rotation der Kurbelwelleneinheit ausgelöst oder verursacht wird, bevor zum Erreichen der Brühstellung der Brühkammer eine weiterführende Rotation der Kurbelwelleneinheit zu einer Linearverstellung der Brühkammer und des Brühkammerträgers führt. Die Führung, insbesondere der Linearverstellung der Brühkammer und des Brühkammerträgers kann durch Gleitsteine oder vergleichbare Mittel erreicht werden, die in Kulissen geführt werden, wobei die Kulissen bevorzugt in Seitenwänden oder Gehäusewänden der Brüheinheit ausgebildet sind.

Weiterhin kann vorteilhaft vorgesehen sein, dass die Brühkammer in ihrem geschlossenen oder einem verschlossenen Zustand, also wenn der Brühkopf die Öffnung der Brühkammer verschließt und/oder abdichte, eine Fluideinlassöffnung und eine Fluidauslassöffnung, insbesondere eine erste Fluidauslassöffnung aufweist. Die Fluideinlassöffnung ist bevorzugt in der Brühkammer, insbesondere im Boden der Brühkammer ausgebildet. Weiter bevorzugt ist die erste Fluidauslassöffnung im Brühkopf, bevorzugt in einer Anpressoberfläche eines Brühkolbens ausgebildet.

In einer weiter vorteilhaften Ausgestaltung kann die Anordnung der Fluidöffnungen auch getauscht sein, was bedeutet, dass dann die Fluideinlassöffnung durch den Brühkopf, insbesondere den Brühkoben bereitgestellt wird und die erste Fluidauslassöffnung durch die Brühkammer, insbesondere den Brühkammerboden, bereitgestellt wird. Die erste Fluidauslassöffnung, gegebenenfalls jedoch auch beide Fluidöffnungen, können vorteilhaft mit Sieben versehen sein, um ein Austreten des Getränkesubstrats zu verringern oder zu vermeiden. Durch die Fluideinlassöffnung kann vorteilhaft das Brühfluid in die verschlossene oder geschlossene Brühkammer eingetragen werden. Durch die erste Fluidauslassöffnung kann vorteilhaft das gebrühte Fluid oder Getränk ausgetragen werden.

Dabei kann besonders vorteilhaft vorgesehen sein, dass die erste Fluidauslassöffnung mit einem Druck- oder Überdruckventil zusammenwirkend vorgesehen ist, welches beim Erreichen eines Grenzdrucks innerhalb einer geschlossenen oder verschlossenen Brühkammer öffnet und den Abfluss von Fluid oder Getränk aus der Brühkammer ermöglicht.

Weiter kann vorteilhaft vorgesehen sein, dass die Einlassöffnung mit einer Pumpvorrichtung verbunden und zusammenwirkend ausgebildet ist, wobei die Pumpvorrichtung eine Förderung eines Brühfluids und eine Druckbeaufschlagung der geschlossenen Brühkammer mit dem Brühfluid ermöglicht. Das Druck- oder Überdruckventil kann auch als Cremaventil bezeichnet werden. Bevorzugt kann die Fluidauslassöffnung und das Druck- oder Überdruckventil, insbesondere Cremaventil, unmittelbar zusammenfallen oder zusammen ausgebildet sein. Die Ausbildung kann jedoch auch räumlich in einem gewissen Abstand zueinander erfolgen. Das Druck- oder Überdruckventil regelt die Abgabe des aufgebrühten Getränks und ist so ausgeführt, dass erst ab einem gewissen Grenzdruck die Abgabe oder der Abfluss ermöglicht oder freigegeben wird. Damit wird, insbesondere bei der Kaffee- oder Espressoherstellung, eine wichtige Grundlage für ein qualitativ hochwertiges Getränk gelegt.

Gemäß einer vorteilhaften Ausführungsform ist das Druck- oder Überdruckventil so auf die Verformungsmittel, die Brühkammer und die Pumpvorrichtung abgestimmt, dass vor einer Öffnung des Druck- oder Überdruckventils eine Verformung der Verformungsmittel bis zu einem mechanischen Anschlag erfolgt, wobei bevorzugte der Anschlag durch einen Teil oder eine Oberfläche des Brühkammerträgers gebildet wird. Dadurch wird in vorteilhafter Weise erreicht, dass bei jedem Brühvorgang eine Brühkammer gefüllt und mit Druck beaufschlagt wird, die ein gleichbleibendes und reproduzierbares Volumen aufweist. Denn bevorzugt wird der von der Pumpvorrichtung bereitgestellte Druck oder Überdruck so auf das Druck- oder Überdruckventil und die Verformungsmittel sowie auf die Geometrie, insbesondere den Querschnitt der Brühkammer, eingestellt, dass bei der Durchführung eines Brühvorgangs oder Brühprozesses zunächst beim Einströmen des Brühfluids durch die Fluideinlassöffnung eine Drucksteigerung innerhalb der Brühkammer erreicht wird, die ihrerseits ein Einfedern der Brühkammer gegenüber dem Brühkammerträger unter Verformung oder weiterer Verformung der Verformungsmittel bewirken wird. Die vorangehend genannten Komponenten der Brüheinheit oder der Getränkezubereitungsvorrichtung sind dabei so aufeinander abgestimmt, dass zunächst ein maximales Brühkammervolumen durch eine weitere Relativbewegung der Brühkammer gegenüber dem Brühkammerträger bis zu einem Anschlag, bevorzugt am Brühkammerträger, erreicht wird, bevor im Anschluss daran das Druck- oder Überdruckventil, welches mit der ersten Fluidauslassöffnung zusammenwirkt, öffnet oder aufgrund des Überschreitens eines Grenzdruckes selbstständig oder selbsttätig öffnet und ein Abfluss oder Abließen des aufgebrühten Getränks ermöglicht.

Gemäß einer vorteilhaften Ausführungsform kann zudem vorgesehen sein, dass die Brühkammer über insgesamt vier einzelne Verformungsmittel, insbesondere Wendelfedern, mit dem Brühkammerträger verbunden ist, wobei die Verformungsmittel bevorzugt die Eckpunkte eines Rechtecks oder Quadrats bilden. Durch diese Ausgestaltung können besonders vorteilhaft einzelne Verformungsmittel mit einer geringen und dementsprechend über eine weitreichende Verformung gleichbleibender oder konstanter Federrate eingesetzt werden. Außerdem kann dadurch ein besonders gleichmäßiges und über die Fläche des Brühkammerbodens oder Brühkammerquerschnitts einheitliches Anpressen oder Verdichten des in der Brühkammer befindlichen Getränkesubstrats erreicht werden.

In einer weiterhin besonders vorteilhaften Ausführungsform der Brüheinheit kann vorgesehen sein, dass die Verformungsmittel im entspannten oder unverformten Zustand eine Länge von 50 bis 60 mm, bevorzugt von 52 bis 58 mm aufweisen. In einem geringfügig vorgespannten Einbauzustand, in dem ein baulich bedingter Maximalabstand zwischen Brühkammerträger und Brühkammer realisiert wird, kann dann eine Länge von etwa 3/4 der unbelasteten Länge realisiert werden. In einem maximal verformten Zustand, also beispielsweise beim Einfedern der Brühkammer bis auf einen Anschlag des Brühkammerträgers, kann eine Verkürzung oder Stauchung auf etwa 40% bis 45% der unbelasteten Länge vorgesehen sein. Damit wird vorteilhaft ermöglicht, dass der bei den gattungsgemäßen Brüheinheiten vorhandene Bauraum, insbesondere in Längsrichtung der Brühkammer, optimal ausgenutzt wird, um einerseits ein optimales Verdichtungsverhalten zu erreichen und andererseits keine Vergrößerung oder Inanspruchnahme zusätzlichen Bauraums zu bewirken.

Durch die oben bereits beschriebene grundsätzliche Ausgestaltung des Brühkammerträgers mit einer an sich großen Länge oder einem verhältnismäßig großen Längsbauraum, kann ohne, dass dieser Bauraum weiter vergrößert werden muss, gemäß der vorteilhaften Ausführungsform besonders lange Verformungsmittel eingesetzt werden, die dann wiederum dazu beitragen, dass bei einer kompakten Ausführung der Brüheinheit insgesamt ein gleichmäßiges, insbesondere von der Menge des Getränkesubstrats unabhängiges Anpressen oder Verdichten erfolgt oder erfolgen kann.

Weiterhin kann gemäß einer vorteilhaften Ausführungsform der Brüheinheit vorgesehen sein, dass das Verformungsmittel oder die Verformungsmittel eine Gesamtrichtgröße von 6,0 N/mm bis 8,0 N/mm, bevorzugt von 6,5 N/mm bis 7,5 N/mm, aufweisen. Dadurch kann in besonders vorteilhafter Weise die oben genannten Vorteile erreicht werden.

Ebenfalls kann besonders vorteilhaft vorgesehen sein, dass die Brühkammer eine zweite Fluidauslassöffnung als Drainageöffnung mit einem zugeordneten, steuerbaren Ventil aufweist, über die, bevorzugt zum Abschluss eines Brühvorgangs, das in der Brühkammer noch verbleibende Brühfluid abgelassen und/oder aus dem Getränkesubstrat ausgepresst werden kann. Damit kann in vorteilhafter Weise eine Entleerung oder Abführung von Restfluid aus der Brühkammer erreicht werden.

In einer besonders vorteilhaften Ausführungsform kann dabei jedoch zusätzlich vorgesehen sein, dass die Verformungsmittel so ausgelegt und/oder ausgebildet sind, dass bei der Öffnung der zweiten Fluidauslassöffnung über das steuerbare Ventil eine Entspannung der Verformungsmittel und damit eine Verkleinerung der geschlossenen Brühkammer erreicht wird. Dadurch wird vorteilhafterweise erreicht, dass bei der Öffnung des steuerbaren Ventils nicht nur das in der Brühkammer verbleibende Brühfluid oder aufgebrühte Getränk abgelassen und abgeführt wird, sondern dass auch das Volumen der Brühkammer verringert und zudem in dem Getränkesubstrat noch eingeschlossenes oder anhaftendes Brühfluid oder aufgebrühtes Getränk aus dem Getränkesubstrat ausgepresst und ebenfalls abgelassen werden kann. Dies wiederum hat die vorteilhafte Wirkung, dass ein trockenerer Getränkesubstratkuchen oder Trester zurückbleibt. Ein Trester mit einer geringeren Restfeuchtigkeit hat jedoch auch Vorteile hinsichtlich der hygienischen Bedingungen in der Getränkezubereitungsvorrichtung.

Sobald also das Druck- oder Überdruckventil, bevorzugt Cremaventil, zum Ende des Brühvorgangs schließt oder wieder schließt, beispielsweise weil der Grenzdruck innerhalb der Brühkammer nicht oder nicht mehr erreicht oder aufrechterhalten wird, bleibt eine gewisse Menge an Flüssigkeit und aufgebrühtem Getränkesubstrat mit einem entsprechenden Überdruck in der Brühkammer, insbesondere in der mit dem Brühkopf verschlossenen und abgedichteten Brühkammer zurück. Durch das Öffnen der zweiten Fluidauslassöffnung als Drainageöffnung, wird das Abfließen dieser Flüssigkeit und Feuchtigkeit ermöglicht, wobei in vorteilhafter Weise das Öffnen der Drainageöffnung über ein steuerbares Ventil gleichzeitig eine Entspannung der Verformungsmittel ermöglicht, sodass das Volumen der Brühkammer verkleinert und zudem das Getränkesubstrat oder der Trester des Getränkesubstrats erneut in der Brühkammer eingepresst oder angepresst wird. All diese Maßnahmen führen dazu, dass bereits ein großer Teil an Restflüssigkeit und Restfeuchtigkeit aus der Brühkammer abgeführt oder entfernt werden kann, insbesondere bevor der verbleibende Trester oder das verbleibende Getränkesubstrat entfernt, beispielsweise in eine Auffangschale überführt wird.

In einer weiteren, besonders vorteilhaften Ausführungsvariante der Brüheinheit kann vorgesehen sein, dass die Brühkammer Positionserfassungsmittel aufweist, mit denen eine Position der Brühkammer gegenüber dem Brühkammerträger und/oder der verbleibenden Brüheinheit erfasst und insbesondere mit Auswertemitteln ausgewertet werden kann. Die Positionserfassungsmittel können auf unterschiedlichen physikalischen Wirkprinzipien beruhen. Es können insbesondere optische, elektrische oder magnetische sowie elektromagnetische Wirkprinzipien bei der Realisierung der Positionserfassungsmittel zum Einsatz kommen. Besonders bevorzugt können die Positionserfassungsmittel ein Wegmesssystem bereitstellen, sodass besonders vorteilhaft nach dem Erreichen der Brühstellung durch den Brühkammerträger die Position der Brühkammer ein Aufschluss über das Volumen des verdichteten Getränkesubstrats ermöglicht. Dies wiederum kann benutzt werden, um beispielsweise zusammen mit weiteren Messsystemen, beispielsweise einem Messsystem, das die abgegebene Menge an Getränkesubstrat ermittelt oder abschätzt, Rückschlüsse über die Verdichtung oder den Verdichtungszustand des Getränkesubstrats zu ermöglichen.

Im Hinblick auf die erfindungsgemäße Getränkezubereitungsvorrichtung wird die oben genannte Aufgabe durch eine Getränkezubereitungsvorrichtung, insbesondere eine Kaffee- und/oder Espressomaschine und/oder -vollautomaten gelöst, die eine Brüheinheit gemäß einer der vorangehenden beschriebenen Ausführungsformen aufweist.

Im Hinblick auf das Verfahren zum Betrieb einer Brüheinheit wird die oben genannte Aufgabe durch ein Verfahren, welches in an sich bekannter Art und Weise die folgenden Verfahrensschritte aufweist:
Verstellen einer Brühkammer, die zur Aufnahme eines Getränkesubstrats, insbesondere gemahlenem Kaffeepulver, über eine Öffnung der Brühkammer eingerichtet ist und einem, bevorzugt der Öffnung gegenüberliegenden Brühkammerboden und einen an den Brühkammerboden angrenzenden und mit dem Brühkammerboden verbundenen, bevorzugt zylindrischen, insbesondere die Öffnung begrenzenden, Brühkammermantel aufweist, aus einer Beladestellung in eine Brühstellung mittels einer Antriebs- oder Verstelleinrichtung.

Verpressen oder Verdichten des Getränkesubstrats in der Brühkammer mittels eines Brühkopfes, der beim Verstellen der Brühammer in die Brühstellung in die Öffnung der Brühkammer, bevorzugt mit einem vorstehenden Brühkolben, zumindest teilweise eingeführt wird.

Erfindungsgemäß sieht das Verfahren zudem vor, dass beim Vorhandensein einer Mindestmenge des Getränkesubstrats in der Brühkammer beim Verstellen der Brühkammer in Richtung der Brühstellung vor dem Erreichen der Brühstellung eine Anpressoberfläche des Brühkopfes, insbesondere des Brühkolbens, mit dem Getränkesubstrat in Kontakt kommt und beim Weiterverstellen der Brühkammer in Richtung der Brühstellung neben einer Verdichtung des Getränkesubstrats eine elastische Verformung von Verformungsmittel zwischen Brühkammer und Brühkammerträger und dadurch eine Bewegung der Brühkammer auf den Brühkammerträger zu bewirkt wird.

Dadurch wird ein Verfahren erreicht, welches mit einer Brüheinheit mit vergleichsweise geringem Bauraum durchgeführt werden kann und trotzdem ein gleichbleibendes hochwertiges Getränk ermöglicht, insbesondere dadurch, dass die Verdichtung oder das Anpressen des Getränkesubstrats im Vorfeld des Brühvorgangs, nämlich bei dem Verstellen der Brühkammer in die Brühstellung, weitestgehend unabhängig von der in der Brühkammer befindlichen Menge von Getränkesubstrat ist, soweit die Mindestmenge überschritten wird.

Um unnötige Wiederholungen zu vermeiden, sollen vorangehend vorrichtungsmäßig offenbarte Merkmale, Vorzüge und Funktionsweisen auch als in Bezug auf das Verfahren als beschrieben und offenbart gelten. Gleichzeitig sollen auch nachfolgend verfahrensmäßig offenbarte Merkmale, Eigenschaften und Vorteile als vorrichtungsgemäß offenbart gelten.

In einer ersten vorteilhaften Ausführungsform des Verfahrens ist vorgesehen, dass beim Vorhandensein einer Mindestmenge des Getränkesubstrats in der Brühkammer unabhängig von der Menge des Getränkesubstrats der Brühkammerträger bei der Überführung der Brühkammer in die Brühstellung eine identische Endposition einnimmt. Dies ermöglicht einerseits eine sichere Erkennung oder Identifizierung der von der Brüheinheit eingenommenen Brühstellung, nämlich anhand der Endposition des Brühkammerträgers. Gleichzeitig ermöglicht die Bestimmung des Abstands der Brühkammer vom Brühkammerträger wie nachfolgend noch detaillierter beschrieben werden wird, ein Rückschluss auf das Volumen des verdichteten Getränkesubstrats in der Brühkammer, was entsprechend ermittelt und gegebenenfalls ausgewertet oder weiterverwertet werden kann.

Gemäß einer weiteren vorteilhaften Ausgestaltung des Verfahrens kann vorgesehen sein, dass der Brühkopf während des Brühvorgangs seine Position oder Absolutposition innerhalb der Brüheinheit beibehält und dementsprechend unbewegt, insbesondere ungefedert, verharrt. Dies soll im Umkehrschluss nicht bedeuten, dass der Brühkopf insgesamt mit all seinen Bestandteilen oder Einzelteilen vollständig unbeweglich ausgebildet ist. Wie nachfolgend noch detaillierter beschrieben werden wird, kann insbesondere zur Ausbildung des oben bereits beschriebenen Druck- oder Überdruckventil vorgesehen sein, dass der Brühkopf einen federgelagerten Ventilträger umfasst, der seinerseits zur Öffnung des Druck- und/oder Überdruckventils während des Brühvorgangs bewegt oder in seiner Absolutposition verändert werden kann. Der Brühkopf als solches, also insbesondere eine der Brühkammer rückseitig angeordnete Seite des Brühkopfes und bevorzugt auch der vorstehende Brühkolben samt seiner bevorzugt von ihm ausgebildeten Anpressoberfläche sollen jedoch während des Brühvorgangs unbewegt, insbesondere ungefedert in ihrer jeweiligen Absolutposition verharren.

Gemäß einer weiteren vorteilhaften Ausführungsform des Verfahrens kann vorgesehen sein, dass die Brühkammer während des Brühvorgangs unter weiterer Verformung des Verformungsmittels bis zu einem Anschlag auf den Brühkammerträger zubewegt wird, wobei bevorzugt der Anschlag durch ein Teil oder eine Oberfläche des Brühkammerträgers gebildet wird. Dies ermöglicht eine konstante Ausgestaltung des Brühkammervolumens während des Aufbrühens des Getränks und insbesondere während der Abgabe oder des Abführen des Getränks.

Ebenfalls vorteilhaft kann vorgesehen sein, dass zum Abschluss eines Brühvorgangs das in der Brühkammer verbleibende Getränkesubstrat durch die Öffnung einer zweiten Fluidauslassöffnung, insbesondere Drainageöffnung, der Brühkammer und eine dadurch bewirkte Entspannung der Verformungsmittel verdichtet wird, wobei dadurch auch in der Brühkammer verbleibendes Brühfluid und/oder aufgebrühtes Getränk abgelassen und aus dem Getränkesubstrat ausgepresst wird.

Ebenfalls kann gemäß einer vorteilhaften Ausführungsform des Verfahrens vorgesehen sein, dass die Position der Brühkammer gegenüber dem Brühkammerträger und/oder der verbleibenden Brüheinheit, insbesondere vor Beginn eines Einströmens von Brühfluid, erfasst, insbesondere mit Auswertemitteln ausgewertet wird, wozu die Brühkammer mit Positionserfassungsmitteln ausgestattet ist.

Die vorliegende Erfindung wird nachfolgend anhand von beispielhaften, lediglich schematischen Zeichnungen von vorteilhaften Ausführungsformen beschrieben und erläutert. Darin zeigen:
- Fig. 1: eine erste perspektivische Darstellung eines Teils der erfindungsgemäßen Brüheinheit;
- Fig. 2:: eine zweite perspektivische Darstellung eines Teils der erfindungsgemäßen Brüheinheit;
- Fig. 3a bis 3d:: eine Reihe von Schnittzeichnungen durch eine erfindungsgemäße Brüheinheit zur Darstellung des Prozesses der Verstellung der Brühkammer ausgehend aus einer Beladestellung in die Brühstellung;
- Fig. 4a, Fig. 4b:: Schnittzeichnungen durch einen Teil der erfindungsgemäßen Brüheinheit beim Erreichen der Brühstellung der Brühkammer für unterschiedliche Mengen von Getränkesubstrat;
- Fig. 5a, Fig. 5b: Schnittzeichnungen durch die geschlossene Brühkammer zu verschiedenen Zeitpunkten des Brühvorgangs nach Initiierung der Einströmung des Brühfluids;
- Fig. 6a, Fig. 6b:: Schnitt durch die Brühkammer nach Abschluss des Einbringens von Brühfluid / zum Abschluss des Brühvorgangs.

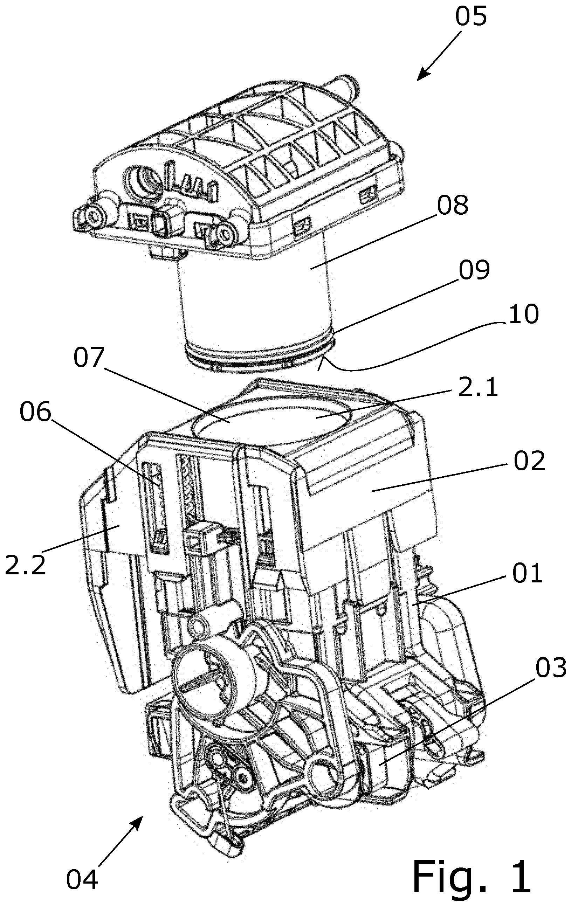

Fig. 1 zeigt einen Brühkammerträger 01, eine vom Brühkammerträger 01 beabstandete und gegenüber dem Brühkammerträger 01 bewegliche Brühkammer 02, einen mit dem Brühkammerträger 01 verbundene Kurbelwelleneinheit 04, einen Brühkopf 05 sowie seitlich an dem Brühkammerträger 01 angeordnete Gleitsteine 03. Wie in der Fig. 1 ansatzweise bereits zu erkennen, ist die Brühkammer 02 über Verformungsmittel 06, insbesondere Wendelfedern, gefedert gegenüber dem Brühkammerträger 01 gelagert. Die Brühkammer 02 umfasst neben einem in der Fig. 1 nicht dargestellten Brühkammerboden eine an dem Brühkammerboden angrenzende und mit diesem verbundenen, bevorzugt sogar mit diesem einteilig ausgebildeten Brühkammermantel 2.1 sowie ein Brühkammergehäuse 2.2 am Übergang zwischen dem Brühkammermantel 2.1 zum Brühkammergehäuse 2.2 wird die Öffnung 07 der Brühkammer ausgebildet.

Je nach Position der Brühkammer 02 und des Brühkammerträgers 01 taucht der am Brühkopf vorstehende Brühkolben 08 in die Öffnung 07 der Brühkammer 02 ein. Dabei wird mittels einer Dichtung 09 die Brühkammer **02** an dem Brühkammermantel **2.1** verschlossen und/oder abgedichtet. Die geschlossene oder verschlossene Brühkammer 02 wird dann durch den Brühkammerboden, einen jeweils unteren Abschnitt des Brühkammermantels 2.1 und eine Anpressoberfläche 10 des Brühkolbens 08 gebildet und/oder begrenzt.

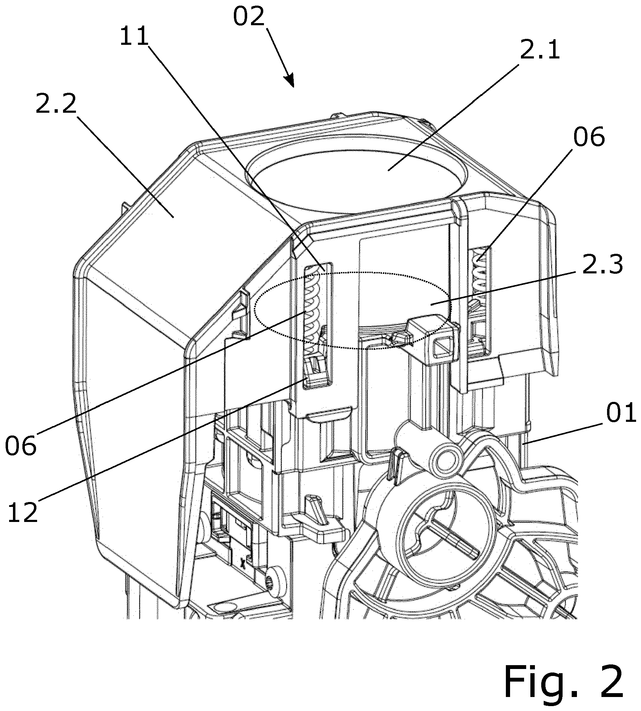

In der Darstellung der Fig. 2 ist durch die halbtransparente Darstellung der Brühkammer 02, des Brühkammergehäuses 2.2 sowie des Brühkammermantels 2.1 deutlicher die Anordnung und Ausgestaltung der Verformungsmittel 06 zu erkennen. Die Verformungsmittel 06 erstrecken sich zwischen dem Brühkammerträger 01 und der Brühkammer 02. Im Brühkammergehäuse 2.2 sind dabei Ausnehmungen 11 vorgesehen, die wiederum von Vorsprüngen 12 des Brühkammerträgers 01 durchsetzt werden und eine Führung der Brühkammer 02 gegenüber des Brühkammerträgers 01 ermöglichen, wenn durch eine mittelbare oder unmittelbare Krafteinwirkung auf die Brühkammer 02, insbesondere auf den Brühkammerboden 2.3 eine elastische Verformung der Verformungsmittel 06, bewirkt wird.

Die Verformungsmittel 06 sind dabei bevorzugt so angeordnet, dass sie die Eckpunkte eines Rechtecks oder eines Quadrats bilden. Die Verformungsmittel 06 sind in dem eigebauten und leicht vorgespannten Zustand bevorzugt zwischen 40 und 45 mm lang und weisen bevorzugt jeweils für sich genommen eine Richtgröße von 1,5 bis 2,0 N/mm, bevorzugt von 1,6 bis 1,9 N/mm, auf.

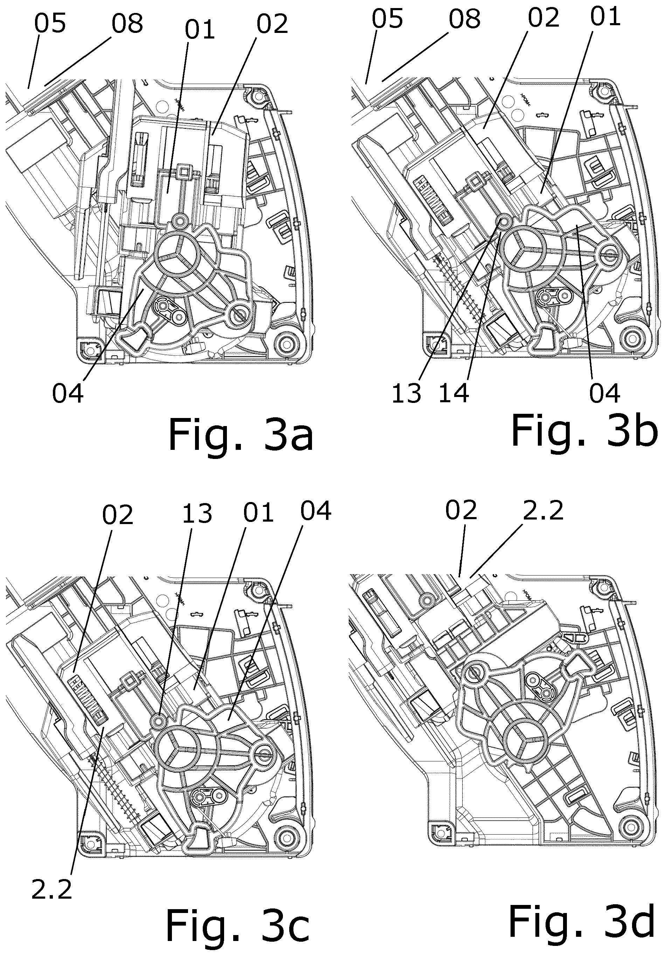

Fig. 3a zeigt einen Schnitt durch die erfindungsgemäße Brüheinheit in einer Beladestellung der Brühkammer 02 sowie des Brühkammerträgers 01. Die Kurbelwelleneinheit 04 befindet sich dementsprechend in einer dazugehörigen Position oder Rotationsposition, durch ein Rotieren der Kurbelwelleneinheit 04 gegen den Uhrzeigersinn wird eine Schwenkbewegung des Brühkammerträgers 01 und der Brühkammer 02 bewirkt, die in der Fig. 3b dargestellt ist, dabei wird ein unteres Führungselement 13 des Brühkammerträgers 01 in einer V-Geometrie 14 der Kurbelwelleneinheit 04 gefangen. Während der Schwenkbewegung zum Erreichen der Position der Fig. 3b findet keine Relativbewegung des Brühkammerträgers 01 zur Kurbelwelleneinheit 04 statt. Ebenfalls findet keine Relativbewegung der Brühkammer 02 gegenüber dem Brühkammerträger statt.

Nach der Schwenkbewegung wird die Brühkammer 02 zusammen mit dem Brühkammerträger 1 linear in Richtung des Brühkopfes 05 bewegt. Wie in Fig. 3c dargestellt, wird die Linearbewegung durch die Führung der Führungselemente 13 an Führungsbahnen oder in Führungskulissen der Seitenwand oder der Gehäusewand der Brüheinheit begrenzt oder bewirkt. Sobald die Führungselemente 13 des Brühkammerträgers 01 an der entsprechenden Führungsbahn oder in der entsprechenden Führungskulisse anliegen oder eingreifen, führt eine weitere Rotation der Kurbelwelleneinheit 04 entgegen des Uhrzeigersinns dazu, dass die Gleitsteine 03 des Brühkammerträgers 01 zusammen mit der Brühkammer 02 linear in Richtung des Brühkopfes 05 und damit in Richtung der Brühstellung verschoben, insbesondere translatorisch bewegt werden. In der Darstellung der Fig. 3d ist dabei das mit der Dichtung 09 versehene Ende des am Brühkopf 05 vorstehenden Brühkolbens 08 bereits in die Brühkammer 02 eingetaucht oder eingeführt und hat zudem, wie im Vergleich zur Fig. 3c deutlich erkenntlich ist, ebenfalls bereits zu einer Verformung der Verformungsmittel **06** geführt, was dadurch erkennbar ist, dass im Gegensatz zur Darstellung der Fig. 3c in der Darstellung der Fig. 3d die Brühkammer 02 samt Brühkammergehäuse 2.2 deutlich auf den Brühkammerträger 01 zubewegt wurde, was gemäß der Darstellung der Fig. 2 mit einer entsprechenden Kompression oder elastischen Verformungen der Verformungsmittel 06 einhergeht.

Im Zusammenhang mit der Erreichung der Konstellation der Einheiten der Brüheinheit, wie in Fig. 3d dargestellt, wird eine in der Brühkammer 02 befindliche Menge von Getränkesubstrat produzierbar verpresst und verdichtet. Denn der Brühkammerträger 01 wird unabhängig von der in der Brühkammer 02 aufgenommenen Menge von Getränkesubstrat durch die Rotation der Kurbelwelleneinheit 04 in eine Brühposition verstellt, insbesondere verschoben, sodass das Einfedern der Brühkammer 02 gegenüber dem Brühkammerträger 01 bis zum Erreichen der Brühposition des Brühkammerträgers 01 im Wesentlichen von der Menge des Getränkesubstrats in der Brühkammer 02 abhängt und ansonsten von den Verformungsmitteln 06 kompensiert oder ausgeglichen wird. Dies führt also zu einer gleichbleibenden Kompression oder Verdichtung des Getränkesubstrats vor dem Einführen oder Einfließen von Brühfluid in die verschlossene oder geschlossene Brühkammer 02.

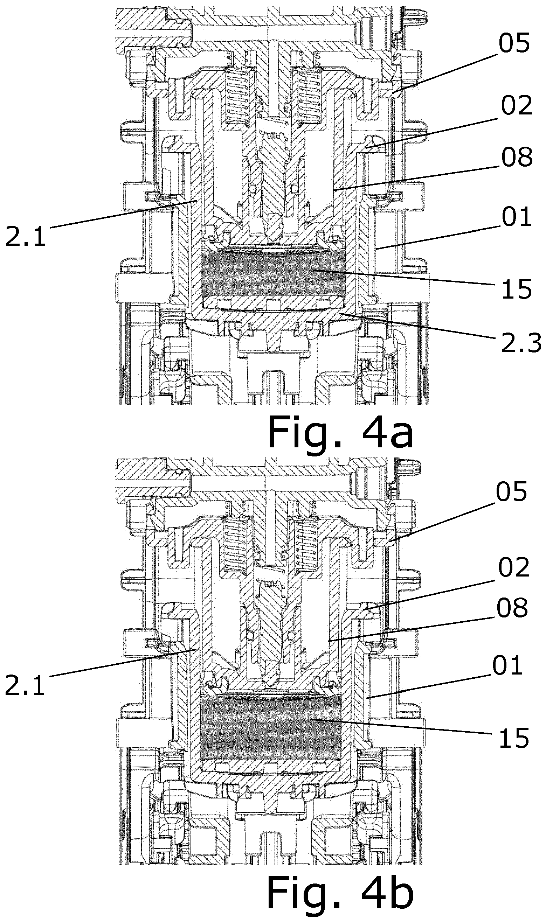

Die Fig. 4a zeigt einen Schnitt durch die Brühkammer 02, den Brühkopf 05 sowie den Brühkammerträger 01. Die Darstellung der Fig. 4a zeigt eine Situation mit verhältnismäßig wenig Getränkesubstrat 15 in der Brühkammer 02. Dementsprechend ist zur Bereitstellung oder zur Erreichung der gewollten oder erwünschten Kompression oder Verdichtung des Getränkesubstrats 15 und damit zur Erreichung der Brühstellung der Brühkammer 02 ein verhältnismäßig geringes Einfedern der Brühkammer 02 und entsprechender elastischer Verformung der Verformungsmittel 06 gegenüber dem Brühkammerträger 01 erforderlich.

Im Vergleich hierzu zeigt die Fig. 4b eine abermalige Positionierung der Brühkammer 02 in der Brühstellung, wobei in der Brühkammer 02 im Gegensatz zur Darstellung der Fig. 4a deutlich mehr Getränkesubstrat 15 angeordnet und angepresst oder vorverdichtet ist. Durch die größere Menge an Getränkesubstrat 15 in der Brühkammer 02 wird eine größere Einfederung der Brühkammer 2 gegenüber dem Brühkammerträger 01 bewirkt, ohne dass dadurch eine größere Verdichtung oder Verpressung des Getränkesubstrats 15 bewirkt wird. Stattdessen gleicht das Einfedern der Verformungsmittel 06 die Menge des Getränkesubstrats 15 aus.

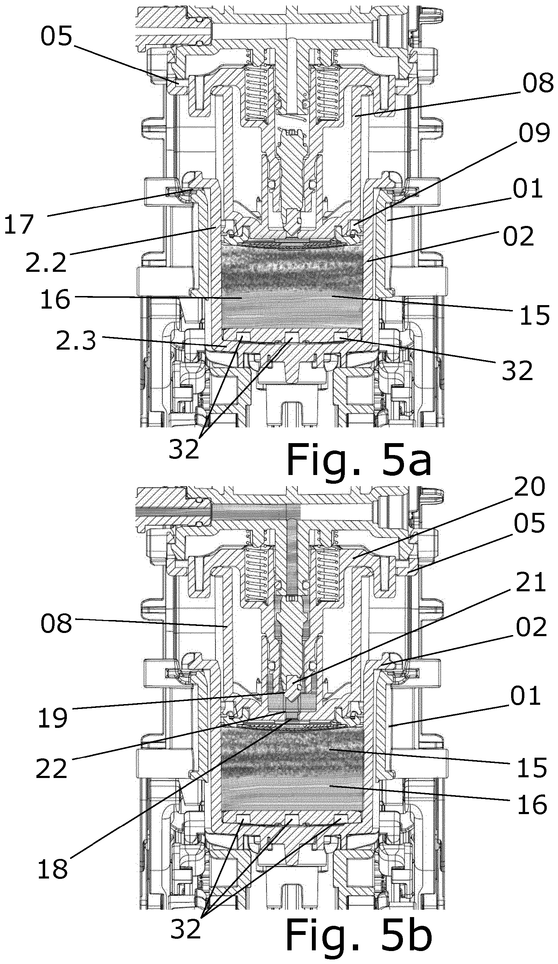

Die Fig. 5a zeigt einen Zustand des Brühvorgangs, bei dem bereits Brühfluid durch eine Fluideinlassöffnung 32 im Brühkammerboden 2.3 begonnen hat. Das vom Brühkammerboden 2.3 unter Druck einströmende Brühfluid 16 hat zu einer Druckerhöhung innerhalb der geschlossenen oder verschlossenen Brühkammer 02 geführt. Dies wiederum hat zu einer Vergrößerung der Brühkammer 02 oder des Brühkammervolumens, beispielsweise im Vergleich zur Darstellung der Fig. 4a geführt, was dadurch bewirkt wird, dass die Brühkammer 02 durch abermalige oder weitere elastische Verformung der Verformungsmittel 06 auf den Brühkammerträger 01 zubewegt wurde, ohne dass sich die Position des Brühkopfes verändert. Dabei wird in jedem Brühvorgang in vorteilhafter Weise ein konstantes maximales Volumen der Brühkammer 02 dadurch erzeugt, dass die Brühkammer 02 auf einen mechanischen Anschlag auffährt oder bewegt wird. Bevorzugt kann der Anschlag 17 den durch einen Teil oder eine Oberfläche des Brühkammerträgers 01 gebildet oder ausgebildet werden. Vorteilhaft kann vorgesehen sein, dass bei einem Brühdruck von etwa 1,5 bis 1,9 bar, der mit der Fluideinlassöffnung 32 zusammenwirkenden und verbundenen Pumpmitteln oder einer dementsprechenden Pumpvorrichtung bereitgestellt wird, das vollständige oder am Anschlag 17 begrenzte Einfedern der Brühkammer 02 durch entsprechende Kompression der Verformungsmittel 06 erreicht ist.

Bei einem weiteren Ansteigen des Brühdrucks durch weiteres druckbeaufschlagtes Einbringen oder Einpressen von Brühfluid 16 in die Brühkammer 02 kann, wie beispielsweise in der Fig. 5 dargestellt, erreicht werden, dass eine in dem Brühkolben 08 angeordnete erste Fluidauslassöffnung 18 durch Überschreiten eines entsprechenden Grenzdrucks geöffnet wird, indem ein entsprechendes Druck- oder Überdruckventil 19 durch den Brühkammerdruck selbsttätig oder selbstständig geöffnet wird.

Das Druck- oder Überdruckventil 19, welches auch Cremaventil genannt werden kann, wird durch einen im Brühkopf 05 federgelagerten Ventilträger 20 bereitgestellt. Wie in der Fig. 5b veranschaulicht, hat der Brühkammerdruck, beispielsweise bei einem mittleren Brühkammerdruck von 6,5 bar einen Ventilkörper 21 des Druck- oder Überdruckventil 19 von einem Ventilsitz 22 durch entsprechende Bewegung des gefedert gelagerten Ventilträgers 20 abgehoben und dadurch die erste Fluidauslassöffnung 18 der Brühkammer 02, insbesondere des Brühkolbens 08 des Brühkopfes 5, geöffnet. Durch den Brühkolben 08 und den Brühkopf 05 kann dadurch das aufgebrühte oder gebrühte Getränk abfließen.

Sobald kein weiteres Brühfluid mehr durch den Brühkammerboden 2.3 in die Brühkammer 02 gefördert wird, und dadurch der Brühkammerdruck wieder sinkt, schließt das Druck- oder Überdruckventil 19 ab einem Unterschreiten eines weiteren Grenzdruckes. Dadurch wird die Abgabe des aufgebrühten Getränks beendet. Es verbleiben jedoch noch Brühfluid 16, aufgebrühtes Getränk und aufgebrühtes Getränkesubstrat 15 in der Brühkammer 02.

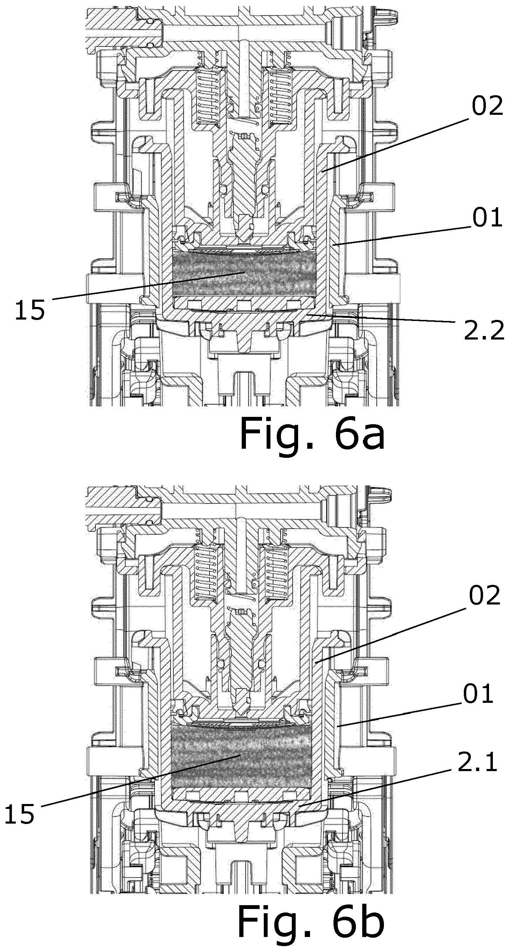

Zur besonders vorteilhaften Entleerung der Brühkammer 02 und des darin befindlichen Getränkesubstrats 15 oder Tresters, kann vorgesehen sein, dass eine zweite Fluidauslassöffnung, die bevorzugt ebenfalls im Bereich des Brühkammerbodens 2.3 angeordnet ist, geöffnet wird. Die Öffnung kann durch ein mit der zweiten Fluidauslassöffnung zusammenwirkendes gesteuertes Ventil erreicht werden. Die Situation nach Öffnung des besagten Ventils und der dazugehörigen zweiten Fluidauslassöffnung der Brühkammer 02 ist für unterschiedliche Mengen von Getränkesubstrat 15 in den Fig. 6a und 6b dargestellt. Die Öffnung der zweiten Fluidauslassöffnung hat dazu geführt, dass die Verformungsmittel 06 entspannt werden oder sich entspannen und dass Brühkammervolumen der Brühkammer 02 verringert wird. Dadurch wird nicht nur besonders vorteilhaft verhältnismäßig viel in der Brühkammer 02 noch verbleibendes Fluid, sei es Brühfluid oder aufgebrühtes Getränk, entfernt oder abgelassen, sondern es wird darüber hinaus auch ein erneutes Verdichten des Getränkesubstrats 15 oder Tresters bewirkt, was dazu führt, dass im Getränkesubstrat 15 eingeflossenes oder am Getränkesubstrat anhaftendes Fluid ausgepresst und bereits aus der Brühkammer 02 abgelassen oder abgeführt werden kann. Die Fig. 6a zeigt dabei eine Situation mit einer geringen Getränkesubstratmenge. Die Fig. 6b zeigt entsprechend eine Situation mit einer mittleren Getränkesubstratmenge.

### Bezugszeichen

- 01: Brühkammerträger
- 02: Brühkammer
- 2.1: Brühkammermantel
- 2.2: Brühkammergehäuse
- 2.3: Brühkammerboden
- 03: Gleitstein
- 04: Kurbelwelleneinheit
- 05: Brühkopf
- 06: Verformungsmittel
- 07: Öffnung
- 08: Brühkolben
- 09: Dichtung
- 10: Anpressoberfläche
- 11: Ausnehmung
- 12: Vorsprung
- 13: Führungselement
- 14: V-Geometrie
- 15: Getränkesubstrat
- 16: Brühfluid
- 17: Anschlag
- 18: Fluidauslassöffnung
- 19: Druck- oder Überdruckventil
- 20: Ventilträger
- 21: Ventilkörper
- 22: Ventilsitz
- 32: Fluideinlassöffnung

## Patentansprüche

1. Brüheinheit für eine Getränkezubereitungsvorrichtung, insbesondere eine Kaffee- und/oder Espressomaschine, mit einer mittels Antriebs- oder Verstelleinrichtung zwischen unterschiedlichen Betriebsstellungen verstellbaren Brühkammer **(02),** die zur Aufnahme eines Getränkesubstrats **(15),** insbesondere gemahlenem Kaffeepulver, über eine Öffnung **(07)** der Brühkammer **(02)** eingerichtet ist und einen, bevorzugt der Öffnung **(07)** gegenüberliegenden, Brühkammerboden **(2.3)** und einen an den Brühkammerboden **(2.3)** angrenzenden und mit dem Brühkammerboden **(2.3)** verbundenen, bevorzugt zylindrischen, insbesondere die Öffnung **(07)** begrenzenden, Brühkammermantel **(2.1)** aufweist,
sowie mit einem Brühkopf **(05),** der zumindest in einer Brühstellung der Brühkammer **(02)** in die Öffnung **(07)** der Brühkammer **(02),** bevorzugt mit einem vorstehenden Brühkolben **(08),** zumindest teilweise eingeführt angeordnet ist,
**dadurch gekennzeichnet,**
**dass** die Brühkammer **(02)** über elastische Verformungsmittel **(06),** bevorzugt mehrere Federn, insbesondere Wendelfedern, mit einem Brühkammerträger **(01)** verbunden und von diesem beweglich beabstandet ist und die Verformungsmittel **(06)** so dimensioniert und ausgestaltet sind, dass beim Vorhandensein einer Mindestmenge an Getränkesubstrat **(15)** in der Brühkammer **(02)** beim Verstellen der Brühkammer **(02)** in Richtung der Brühstellung vor dem Erreichen der Brühstellung eine Anpressoberfläche **(10)** des Brühkopfes **(05),** insbesondere des Brühkolbens **(08),** mit dem Getränkesubstrat **(15)** in Kontakt kommt und beim weiteren Verstellen der Brühkammer **(02)** in Richtung der Brühstellung neben einer Verdichtung des Getränkesubstrats **(15)** eine elastische Verformung des Verformungsmittel **(06)** und eine Bewegung der Brühkammer **(02)** auf den Brühkammerträger **(01)** zu bewirkt.

2. Brüheinheit nach Anspruch 1,
**dadurch gekennzeichnet,**
**dass** der Brühkopf **(05)** starr, bevorzugt ungefedert, ausgebildet und angeordnet ist.

3. Brüheinheit nach Anspruch 1 oder 2,
**dadurch gekennzeichnet,**
**dass** der Brühkammerträger **(01)** mit einer Kurbelwelleneinheit **(04)** verbunden ist, wobei die Verbindung derart ausgestaltet ist, dass die Kurbelwelleneinheit **(04)** je nach Rotation oder Rotationszustand eine Kippbewegung oder Linearverstellung des Brühkammerträgers **(01)** und der Brühkammer **(02)** bewirkt.

4. Brüheinheit nach einem der Ansprüche 1 bis 3,
**gekennzeichnet durch**
eine Fluideinlassöffnung (32) und eine erste Fluidauslassöffnung (18), wobei die Fluideinlassöffnung **(32)** bevorzugt in der Brühkammer **(02),** insbesondere im Brühkammerboden **(2.2)** ausgebildet ist und die erste Fluidauslassöffnung **(18)**, bevorzugt im Brühkopf **(05),** besonders bevorzugt in einer Anpressoberfläche **(10)** eines Brühkolbens **(08),** ausgebildet ist.

5. Brüheinheit nach Anspruch 4,
**dadurch gekennzeichnet,**
**dass** die erste Fluidauslassöffnung **(18)** mit einem Druck- oder Überdruckventil **(19)** zusammenwirkend vorgesehen ist, welches beim Erreichen eines Grenzdrucks innerhalb einer verschlossenen Brühkammer **(02)** öffnet und den Abfluss von Fluid aus der Brühkammer **(02)** ermöglicht und die Einlassöffnung **(32)** mit einer Pumpvorrichtung verbunden ist, die eine Förderung eines Brühfluides **(16)** und eine Druckbeaufschlagung der Brühkammer **(02)** mit dem Brühfluid **(16)** ermöglicht.

6. Brüheinheit nach einem der Ansprüche 4 oder 5,
**dadurch gekennzeichnet,**
**dass** das Druck- oder Überdruckventil **(19)** so auf die Verformungsmittel **(06),** die Brühkammer **(02)** und Pumpvorrichtung abgestimmt ist, dass vor einer Öffnung des Druck- oder Überdruckventils **(19)** eine Verformung der Verformungsmittel **(06)** bis zu einem mechanischen Anschlag **(17)** erfolgt, wobei bevorzugt der Anschlag **(17)** durch einen Teil oder eine Oberfläche des Brühkammerträgers **(01)** gebildet wird.

7. Brüheinheit nach einem der Ansprüche 1 bis 6,
**dadurch gekennzeichnet,**
**dass** die Brühkammer **(02)** über mehrere, bevorzugt über insgesamt vier, Verformungsmittel **(06)** mit dem Brühkammerträger **(01)** verbunden ist, wobei die Verformungsmittel **(06)** bevorzugt die Eckpunkte eines Rechtecks oder Quadrates bilden.

8. Brüheinheit nach einem der Ansprüche 1 bis 7,
**dadurch gekennzeichnet,**
**dass** die Verformungsmittel **(06)** im entspannten oder unverformten Zustand eine Länge von 50 mm bis 60 mm aufweisen.

9. Brüheinheit nach einem der Ansprüche 1 bis 8,
**dadurch gekennzeichnet,**
**dass** das Verformungsmittel **(06)** eine Gesamtrichtgröße von 6,0 N/mm bis 8,0 N/mm, bevorzugt von 6,5 N/mm bis 7,5 N/mm, aufweisen.

10. Brüheinheit nach einem der Ansprüche 1 bis 9,
**dadurch gekennzeichnet,**
**dass** die Brühkammer **(02)** eine zweite Fluidauslassöffnung **(18)** als Drainageöffnung mit einem zugeordneten, steuerbaren Ventil aufweist, über die, bevorzugt zum Abschluss eines Brühvorgangs, das in der Brühkammer **(02)** noch verbleibende Brühfluid **(16)** abgelassen werden kann.

11. Brüheinheit nach Anspruch 10,
**dadurch gekennzeichnet,**
**dass** die Verformungsmittel **(06)** so ausgelegt sind, dass bei der Öffnung **(07)** der zweiten Fluidauslassöffnung **(18)** über das steuerbare Ventil eine Entspannung der Verformungsmittel **(06)** und damit eine Verkleinerung der geschlossenen Brühkammer **(02)** erreicht wird.

12. Brüheinheit nach einem der Ansprüche 1 bis 11,
**dadurch gekennzeichnet,**
**dass** die Brühkammer **(02)** Positionserfassungsmittel aufweist, mit denen eine Position der Brühkammer **(02)** gegenüber dem Brühkammerträger **(01)** und/oder der verbleibenden Brüheinheit erfasst und insbesondere mit Auswertemitteln ausgewertet werden kann.

13. Getränkezubereitungsvorrichtung, insbesondere eine Kaffee-
und/oder Espressomaschine, mit einer Brüheinheit nach einem der Ansprüche 1 bis 12.

14. Verfahren zum Betrieb einer Brüheinheit für eine Getränkezubereitungsvorrichtung, insbesondere eine Kaffee- und/oder Espressomaschine, insbesondere Verfahren zum Durchführen eines Brühvorgangs, umfassend die Verfahrensschritte:
- Verstellen einer Brühkammer **(02),** die zur Aufnahme eines Getränkesubstrats **(15),** insbesondere gemahlenem Kaffeepulver, über eine Öffnung **(07)** der Brühkammer **(02)** eingerichtet ist und einen, bevorzugt der Öffnung **(07)** gegenüberliegenden, Brühkammerboden **(2.3)** und einen an den Brühkammerboden **(2.3)** angrenzenden und mit dem Brühkammerboden **(2.3)** verbundenen, bevorzugt zylindrischen, insbesondere die Öffnung **(07)** begrenzenden, Brühkammermantel **(2.1)** aufweist, aus einer Beladestellung in eine Brühstellung mittels einer Antriebs- oder Verstelleinrichtung
- Verpressen oder Verdichten des Getränkesubstrats **(15)** in der Brühkammer **(02)** mittels eines Brühkopfes **(05),** der beim Verstellen der Brühkammer **(02)** in die Brühstellung in die Öffnung **(07)** der Brühkammer **(02),** bevorzugt mit einem vorstehenden Brühkolben (08), zumindest teilweise eingeführt wird,
**dadurch gekennzeichnet,**
**dass** beim Vorhandensein einer Mindestmenge des Getränkesubstrats **(15)** in der Brühkammer **(02)** beim Verstellen der Brühkammer **(02)** in Richtung der Brühstellung vor dem Erreichen der Brühstellung eine Anpressoberfläche **(10)** des Brühkopfes **(05),** insbesondere des Brühkolbens **(08),** mit dem Getränkesubstrat **(15)** in Kontakt kommt und beim weiteren Verstellen der Brühkammer **(02)** in Richtung der Brühstellung neben einer Verdichtung des Getränkesubstrats **(15)** eine elastische Verformung von Verformungsmittel **(06)** zwischen Brühkammer **(02)** und einem Brühkammerträger **(01)** und dadurch eine Bewegung der Brühkammer **(02)** auf den Brühkammerträger **(01)** zu bewirkt wird.

15. Verfahren nach Anspruch 14,
**dadurch gekennzeichnet,**
**dass** beim Vorhandensein einer Mindestmenge des Getränkesubstrats **(15)** in der Brühkammer **(02)** unabhängig von der Menge der Getränkesubstrats **(15)** der Brühkammerträger **(01)** bei der Überführung der Brühkammer **(02)** in die Brühstellung eine identische Endposition einnimmt.

16. Verfahren nach Anspruch 14 oder 15,
**dadurch gekennzeichnet,**
**dass** der Brühkopf **(05)** während des Brühvorgangs seine Absolutposition innerhalb der Brüheinheit beibehält.

17. Verfahren nach einem der Ansprüche 14 bis 16 ,
**dadurch gekennzeichnet,**
**dass** die Brühkammer **(02)** während des Brühvorgangs unter weiterer Verformung des Verformungsmittels **(06)** bis zu einem Anschlag **(17)** auf den Brühkammerträger **(01)** zubewegt wird.

18. Verfahren nach einem der Ansprüche 14 bis 17,
**dadurch gekennzeichnet,**
**dass** zum Abschluss eines Brühvorgangs das in der Brühkammer **(02)** verbleibende Getränkesubstrat **(15)** durch die Öffnung **(07)** einer zweiten Fluidauslassöffnung **(18),** insbesondere Drainageöffnung, der Brühkammer **(02)** und eine dadurch bewirkte Entspannung der Verformungsmittel **(06)** erneut verdichtet wird, wobei dadurch auch in der Brühkammer **(02)** verbleibendes Brühfluid **(16)** abgelassen und aus dem Getränkesubstrat **(15)** ausgepresst wird.

19. Verfahren nach einem der Ansprüche 14 bis 18,
**dadurch gekennzeichnet,**
**dass** die Position der Brühkammer **(02)** gegenüber dem Brühkammerträger **(01)** und/oder der verbleibenden Brüheinheit, insbesondere vor Beginn eines Einströmens von Brühfluid **(16),** erfasst und, insbesondere mit Auswertmitteln ausgewertet wird, wozu die Brühkammer **(02)** Positionserfassungsmittel ausgestattet ist.

## Claims

1. A brewing unit for a beverage preparation device, in particular a coffee and/or espresso machine, the brewing unit comprising: a brewing chamber (02) adjustable between different operating positions by means of a drive or adjustment mechanism and configured to receive a beverage substrate (15), in particular ground coffee powder, via an opening (07) of the brewing chamber (02) and having a brewing chamber bottom (2.3), which is preferably located opposite the opening (07), and a preferably cylindrical brewing chamber wall (2.1), which is adjacent to the brewing chamber bottom (2.3) and is connected to the brewing chamber bottom (2.3) and in particular defines the opening (07); and
a brew head (05), at least part of which, preferably a protruding brewing piston (08), is inserted into the opening (07) of the brewing chamber (02) at least when the brewing chamber (02) is in a brewing position,
**characterized in that**
the brewing chamber (02) is connected to a brewing chamber support (01) via elastic deformation means (06), preferably multiple springs, in particular helical wound springs, and spaced apart therefrom in a movable manner, and the deformation means (06) are dimensioned and designed in such a manner that when a minimum amount of beverage substrate (15) is present in the brewing chamber (02) and when the brewing chamber (02) is moved in the direction of the brewing position, a pressing surface (10) of the brew head (05), in particular of the brewing piston (08), comes into contact with the beverage substrate (15) before the brewing position is reached, and when the brewing chamber (02) is moved further in the direction of the brewing position, the pressing surface (10) effects an elastic deformation of the deformation means (06) and a movement of the brewing chamber (02) toward the brewing chamber support (01) in addition to a compaction of the beverage substrate (15).

2. The brewing unit according to claim 1,
**characterized in that**
the brew head (05) is configured and disposed in a rigid, preferably non-elastic manner.

3. The brewing unit according to claim 1 or 2,
**characterized in that**
the brewing chamber support (01) is connected to a crankshaft unit (04), the connection being configured in such a manner that the crankshaft unit (04) effects a tilting movement or a linear displacement of the brewing chamber support (01) and the brewing chamber (02) depending on the rotation or the state of rotation.

4. The brewing unit according to any one of claims 1 to 3, **characterized by**
a fluid inlet opening (32) and a first fluid outlet opening (18), the fluid inlet opening (32) preferably being formed in the brewing chamber (02), in particular in the brewing chamber bottom (2.2), and the first fluid outlet opening (18) preferably being formed in the brew head (05), particularly preferably in a pressing surface (10) of a brewing piston (08).

5. The brewing unit according to claim 4,
**characterized in that**
the first fluid outlet opening (18) is configured to interact with a pressure or pressure relief valve (19), which opens when a threshold pressure is reached within a closed brewing chamber (02) and allows fluid to flow out of the brewing chamber (02), and the inlet opening (32) is connected to a pump device which allows a brewing fluid (16) to be delivered and the brewing chamber (02) to be pressurized with the brewing fluid (16).

6. The brewing unit according to any one of claims 4 or 5, **characterized in that**
the pressure or pressure relief valve (19) is adapted to the deformation means (06), the brewing chamber (02) and the pump device in such a manner that the deformation means (06) are deformed up to a mechanical stop (17) before the pressure or pressure relief valve (19) opens, the stop (17) being preferably formed by a portion or a surface of the brewing chamber support (01).

7. The brewing unit according to any one of claims 1 to 6, **characterized in that**
the brewing chamber (02) is connected to the brewing chamber support (01) via multiple, preferably a total of four, deformation means (06), the deformation means (06) preferably forming the corner points of a rectangle or a square.

8. The brewing unit according to any one of claims 1 to 7, **characterized in that**
the deformation means (06) have a length of 50 mm to 60 mm in the relaxed or non-deformed state.

9. The brewing unit according to any one of claims 1 to 8, **characterized in that**
the deformation means (06) have a total spring constant of 6.0 N/mm to 8.0 N/mm, preferably 6.5 N/mm to 7.5 N/mm.

10. The brewing unit according to any one of claims 1 to 9, **characterized in that**
the brewing chamber (02) has a second fluid outlet opening (18) as a drainage opening which has an associated controllable valve and via which brewing fluid (16) still remaining in the brewing chamber (02) can be drained, preferably at the end of a brewing process.

11. The brewing unit according to claim 10,
**characterized in that**
the deformation means (06) are configured in such a manner that when the second fluid outlet opening (18) is opened via the controllable valve, the deformation means (06) are relaxed and the closed brewing chamber (02) thus becomes smaller.

12. The brewing unit according to any one of claims 1 to 11, **characterized in that**
the brewing chamber (02) has position detection means configured to detect a position of the brewing chamber (02) relative to the brewing chamber support (01) and/or the remaining brewing unit and in particular to evaluate it by means of evaluating means.

13. A beverage preparation device, in particular a coffee and/or espresso machine, comprising a brewing unit according to any one of claims 1 to 12.

14. A method for operating a brewing unit for a beverage preparation device, in particular a coffee and/or espresso machine, in particular a method for carrying out a brewing process, the method comprising the following steps:
- moving a brewing chamber (02), which is configured to receive a beverage substrate (15), in particular ground coffee powder, via an opening (07) of the brewing chamber (02) and has a brewing chamber bottom (2,3), which is preferably located opposite the opening (07), and a preferably cylindrical brewing chamber wall (2.1), which is adjacent to the brewing chamber bottom (2.3) and connected to the brewing chamber bottom (2.3) and in particular defines the opening (07), from a loading position into a brewing position by means of a drive or adjusting mechanism;
- compressing or compacting the beverage substrate (15) in the brewing chamber (02) by means of a brew head (05), at least part of which, preferably a protruding brewing piston (08), is inserted into the opening (07) of the brewing chamber (02) when the brewing chamber (02) is moved into the brewing position, **characterized in that**
when a minimum amount of the beverage substrate (15) is present in the brewing chamber (02) and when the brewing chamber (02) is moved in the direction of the brewing position, a pressing surface (10) of the brew head (05), in particular of the brewing piston (08), comes into contact with the beverage substrate (15) before the brewing position is reached, and when the brewing chamber (02) is moved further in the direction of the brewing position, an elastic deformation of deformation means (06) between the brewing chamber (02) and a brewing chamber support (01) and thus a movement of the brewing chamber (02) toward the brewing chamber support (01) are effected in addition to a compaction of the beverage substrate (15).

15. The method according to claim 14,
**characterized in that**
when a minimum amount of the beverage substrate (15) is present in the brewing chamber (02), the brewing chamber support (01) moves into an identical end position irrespective of the amount of the beverage substrate (15) when the brewing chamber (02) is moved into the brewing position.

16. The method according to claim 14 or 15,
**characterized in that**
the brew head (05) keeps its absolute position within the brewing unit during the brewing process.

17. The method according to any one of claims 14 to 16, **characterized in that**
the brewing chamber (02) is moved toward the brewing chamber support (01) up to a stop (17) during the brewing process, the deformation means (06) being deformed further in the process.

18. The method according to any one of claims 14 to 17, **characterized in that**
at the end of a brewing process, the beverage substrate (15) remaining in the brewing chamber (02) is compacted again by opening a second fluid outlet opening (18), in particular a drainage opening, of the brewing chamber (02) and a thus caused relaxation of the deformation means (06), whereby brewing fluid (16) remaining in the brewing chamber (02) is also drained and pressed out of the beverage substrate (15).

19. The method according to any one of claims 14 to 18, **characterized in that**
the position of the brewing chamber (02) relative to the brewing chamber support (01) and/or the remaining brewing unit is detected and in particular evaluated by means of evaluation means, in particular before brewing fluid (16) starts to flow in, for which purpose the brewing chamber (02) is equipped with position detection means.

## Revendications

1. Unité de percolation pour un dispositif de préparation de boissons, notamment une machine à café et/ou expresso, l'unité de percolation comprenant : une chambre de percolation (02) ajustable entre des positions de fonctionnement différentes au moyen d'un mécanisme d'entraînement ou d'ajustement et configurée pour recevoir d'un substrat de boisson (15), notamment du café moulu, à travers une ouverture (07) de la chambre de percolation (02) et ayant un fond de chambre de percolation (2.3), qui est de préférence situé en face de l'ouverture (07), et une paroi de chambre de percolation (2.1) de préférence cylindrique, qui est adjacente au fond de chambre de percolation (2.3) et reliée au fond de chambre de percolation (2.3) et définit notamment l'ouverture (07) ; et
une tête de percolation (05) duquel au moins une partie, de préférence un piston de percolation (08) saillant, est insérée dans l'ouverture (07) de la chambre de percolation (02), au moins quand la chambre de percolation (02) est dans une position de percolation,
**caractérisée en ce que**
la chambre de percolation (02) est reliée à un support de chambre de percolation (01) par des moyens de déformation (06) élastiques, de préférence plusieurs ressorts, notamment des ressorts hélicoïdaux, et espacée de celui-ci de manière déplaçable et les moyens de déformation (06) sont dimensionnés et conçus de telle manière que, quand une quantité minimale du substrat de boisson (15) est présente dans la chambre de percolation (02) et quand la chambre de percolation (02) est déplacée dans la direction de la position de percolation, une surface de pression (10) de la tête de percolation (05), notamment du piston de percolation (08), vient en contact avec le substrat de boisson (15) avant que la position de percolation soit atteinte, et quand la chambre de percolation (02) est déplacée plus dans la direction de la position de percolation, la surface de pression (10) effectue une déformation élastique des moyens de déformation (06) et un mouvement de la chambre de percolation (02) vers le support de chambre de percolation (01) en plus d'un compactage du substrat de boisson (15).

2. Unité de percolation selon la revendication 1,
**caractérisée en ce que**
la tête de percolation (05) est configurée et disposée de manière rigide, de préférence non élastique.

3. Unité de percolation selon la revendication 1 ou 2,
**caractérisée en ce que**
le support de chambre de percolation (01) est relié à une unité de vilebrequin (04), la liaison étant configurée de telle manière que l'unité vilebrequin (04) effectue un mouvement pivotant ou un déplacement linéaire du support de chambre de percolation (01) et de la chambre de percolation (02) en fonction de la rotation ou de l'état de rotation.

4. Unité de percolation selon l'une quelconque des revendications 1 à 3, **caractérisée par**
une ouverture d'entrée de fluide (32) et une première ouverture de sortie de fluide (18), l'ouverture d'entrée de fluide (32) étant de préférence formée dans la chambre de percolation (02), notamment dans le fond de chambre de percolation (2.2), et la première ouverture de sortie de fluide (18) étant de préférence formée dans la tête de percolation (05), de préférence notamment dans une surface de pression (10) d'un piston de percolation (08).

5. Unité de percolation selon la revendication 4,
**caractérisée en ce que**
la première ouverture de sortie de fluide (18) est configurée pour interagir avec une soupape de pression ou de surpression (19), qui s'ouvre quand une pression seuil est atteinte dans une chambre de percolation (02) fermée et permet au fluide de s'écouler de la chambre de percolation (02), et l'ouverture d'entrée (32) est reliée à un dispositif de pompe qui permet de refouler du fluide de percolation (16) et à la chambre de percolation (02) d'être pressurisée par le fluide de percolation (16).

6. Unité de percolation selon l'une quelconque des revendications 4 ou 5,
**caractérisée en ce que**
la soupape de pression ou de surpression (19) est adaptée aux moyens de déformation (06), à la chambre de percolation (02) et au dispositif de pompe de telle manière que les moyens de déformation (06) sont déformés jusqu'à un arrêt mécanique (17) avant que la soupape de pression ou de surpression (19) s'ouvre, l'arrêt (17) étant de préférence formé par une partie ou une surface du support de chambre de percolation (01).

7. Unité de percolation selon l'une quelconque des revendications 1 à 6, **caractérisée en ce que**
la chambre de percolation (02) est reliée au support de chambre de percolation (01) par plusieurs, de préférence en tout quatre, moyens de déformation (06), les moyens de déformation (06) formant de préférence les coins d'un rectangle ou d'un carré.

8. Unité de percolation selon l'une quelconque des revendications 1 à 7, **caractérisée en ce que**
les moyens de déformation (06) ont une longueur de 50 mm à 60 mm dans l'état détendu ou non déformé.

9. Unité de percolation selon l'une quelconque des revendications 1 à 8, **caractérisée en ce que**
les moyens de déformation (06) ont une constante de raideur totale de 6,0 N/mm à 8,0 N/mm, de préférence 6,5 N/mm à 7,5 N/mm.

10. Unité de percolation selon l'une quelconque des revendications 1 à 9, **caractérisée en ce que**
la chambre de percolation (02) a une deuxième ouverture de sortie de fluide (18) comme ouverture de drainage, qui a une soupape commandable associée et par laquelle le fluide de percolation (16) restant encore dans la chambre de percolation (02) peut être évacué, de préférence à la fin d'un processus de percolation.

11. Unité de percolation selon la revendication 10,
**caractérisée en ce que**
les moyens de déformation (06) sont configurés de telle manière que quand la deuxième ouverture de sortie de fluide (18) est ouverte par la soupape commandable, les moyens de déformation (06) sont détendus et la chambre de percolation (02) fermée devient ainsi plus petite.

12. Unité de percolation selon l'une quelconque des revendications 1 à 11,
**caractérisée en ce que**
la chambre de percolation (02) a des moyens de détection de position configurés pour détecter une position de la chambre de percolation (02) par rapport au support de chambre de percolation (01) et/ou à l'unité de percolation restante et notamment pour l'évaluer par des moyens d'évaluation.

13. Dispositif de préparation de boissons, notamment une machine à café et/ou expresso, comprenant une unité de percolation selon l'une quelconque des revendications 1 à 12.

14. Procédé de fonctionnement d'une unité de percolation pour un dispositif de préparation de boissons, notamment une machine à café et/ou expresso, notamment un procédé pour effectuer un processus de percolation, le procédé comprenant les étapes consistant à :
- déplacer une chambre de percolation (02), qui est configurée pour recevoir un substrat de boisson (15), notamment du café moulu, à travers une ouverture (07) de la chambre de percolation (02) et qui a un fond de chambre de percolation (2,3), qui est de préférence située en face de l'ouverture (07), et une paroi de chambre de percolation (2.1) de préférence cylindrique, qui est adjacente au fond de chambre de percolation (2.3) et reliée au fond de chambre de percolation (2.3) et définit notamment l'ouverture (07), d'une position de chargement dans un position de percolation au moyens d'un mécanisme d'entraînement ou d'ajustement ;
- comprimer ou compacter le substrat de boisson (15) dans la chambre de percolation (02) au moyen d'une tête de percolation (05), duquel au moins une partie, de préférence un piston de percolation (08) saillant, est insérée dans l'ouverture (07) de la chambre de percolation (02) quand la chambre de percolation (02) est déplacée dans la position de percolation, **caractérisé en ce que**
quand une quantité minimale du substrat de boisson (15) est présente dans la chambre de percolation (02) et quand la chambre de percolation (02) est déplacée dans la direction de la position de percolation, une surface de pression (10) de la tête de percolation (05), notamment du piston de percolation (08), vient en contact avec le substrat de boisson (15) avant que la position de percolation soit atteinte, et quand la chambre de percolation (02) est déplacée plus dans la direction de la position de percolation, une déformation élastique de moyens de déformation (06) entre la chambre de percolation (02) et un support de chambre de percolation (01) et ainsi un déplacement de la chambre de percolation (02) vers le support de chambre de percolation (01) sont effectués en plus d'un compactage du substrat de boisson (15).

15. Procédé selon la revendication 14,
**caractérisé en ce que**
quand une quantité minimale du substrat de boisson (15) est présente dans la chambre de percolation (02), le support de chambre de percolation (01) se positionne dans une position finale identique indépendamment de la quantité du substrat de boisson (15) quand la chambre de percolation (02) est amenée dans la position de percolation.

16. Procédé selon la revendication 14 ou 15,
**caractérisé en ce que**
la tête de percolation (05) maintient sa position absolue dans l'unité de percolation pendant le processus de percolation.

17. Procédé selon l'une quelconque des revendications 14 à 16, **caractérisé en ce que**
la chambre de percolation (02) est déplacée vers le support de chambre de percolation (01) jusqu'à un arrêt (17) pendant le processus de percolation, tout en déformant plus les moyens de déformation (06).

18. Procédé selon l'une quelconque des revendications 14 à 17, **caractérisé en ce**
**qu'**à la fin du processus de percolation, le substrat de boisson (15) restant dans la chambre de percolation (02) est compacté à nouveau en ouvrant une deuxième ouverture de sortie de fluide (18), notamment une ouverture de drainage, de la chambre de percolation (02) et par une relaxation résultante des moyens de déformation (06), ce qui évacue aussi du fluide de percolation (16) restant dans la chambre de percolation (02) et le sort du substrat de boisson (15).

19. Procédé selon l'une quelconque des revendications 14 à 18, **caractérisé en ce que**
la position de la chambre de percolation (02) par rapport au support de chambre de percolation (01) et/ou à l'unité de percolation restante est détectée et évaluée notamment par des moyens d'évaluation, notamment avant que du fluide de percolation (16) commence à entrer, dans quel but la chambre de percolation (02) est munie de moyens de détection de position.
